# EUROPEAN PATENT APPLICATION

(11) **EP 2 590 127 A1**
(43) Date of publication of application: **08.05.2013**
(21) Application number: 11800624.6
(22) Date of filing: 16.06.2011
(51) Int. Cl.: G06Q 30/00

(54) **ORDER RECEIVING DEVICE, METHOD OF RECEIVING ORDERS, PROGRAM, AND INFORMATION RECORDING MEDIUM**

(30) Priority: 30.06.2010 JP 2010149738
(71) Applicant: Rakuten, Inc., Tokyo 140-0002 (JP)
(72) Inventor: IINO Tsukasa, Tokyo 140-0002 (JP)
(74) Representative: Price, Christopher
(86) International application number: PCT/JP2011/063798
(87) International publication number: WO 2012/002158

(57) **Abstract**

An order receiving device (100) includes: a receiver (101) configured to receive information regarding a product a user has shown intent to purchase; a bonus information acquirer (104) configured to acquire information regarding a bonus, the bonus being offered to the user on the condition of an order completion of the product whose information regarding the product was received; a confirmer (102) configured to require the user to confirm information necessary for an order at different stages by the time of the order completion; a selector (106) configured to select any of the stages on the basis of the history regarding a product with an incompletion order of one or more products the user had shown intent to purchase in the past; and a presenter (107) configured to present acquired information regarding the bonus at the selected stage.

## Description

### Technical Field

The present invention relates to an order receiving device, an order receiving method, a program and an information recording medium, and discourages a user from stopping the purchase of a product.

### Background Art

In online shopping, a user must carry out more than one procedure for purchasing a product. For example, Patent Literature 1 discloses a system that requires input of the purchaser's information and input of the product delivery address and the like during the time between browsing for a product and completing the order.

### Prior Art Literature

### Patent Literature

Patent Literature 1: Unexamined Japanese Patent Application Kokai Publication No. 2002-304537

### Disclosure of the Invention

### Problem to be Solved by the Invention

However, in the middle of the above order procedures, a user may stop purchasing and may not reach order completion for some reason. The seller of the product desires to discourage the user from aborting the purchase of a product in the middle of the procedure since the user has shown intent to purchase the product.

The present invention will solve the above problem, and is intended to provide an order receiving device, an order receiving method, a program and an information recording medium that are suitable for discouraging a user from stopping the purchase of a product.

### Means for Solving the Problem

An order receiving device according to a first aspect of the present invention is provided with:
a receiver configured to receive information regarding a product a user has shown intent to purchase;
a bonus information acquirer configured to acquire information regarding a bonus, the bonus being offered to the user on the condition of an order completion of the product whose information regarding the product was received;
a confirmer configured to require the user to confirm information necessary for an order at different stages by the time of the order completion;
a selector configured to select any of the stages on the basis of the history regarding a product with an incompletion order of one or more products the user had shown intent to purchase in the past; and
a presenter configured to present the acquired information regarding the bonus at the selected stage.

The order receiving device according to the above aspect,
may be provided with a storage configured to store information regarding the one or more products the user had shown intent to purchase in the past in association with the history regarding the stage the user had reached,
in which the selector may select any of the stages on the basis of statistics regarding the stage of the product with the incompletion order of the one or more products whose information regarding the one or more products was stored.

The order receiving device according to the above aspect,
may be provided with a storage configured to store information regarding the one or more products the user had shown intent to purchase in the past in association with the history regarding the stage the user had reached,
in which if a product group that contains the product with the incompletion order of the one or more products whose information regarding the one or more products was stored matches a product group that contains the product whose information regarding the product was received, the selector may select the stage of the product with the incompletion order.

The order receiving device according to the above aspect,
may include a user information acquirer configured to acquire information relating to the user,
in which the bonus information acquirer may acquire information regarding the bonus to be offered to the user based on the received information regarding the product and information relating to the user.

In the order receiving device according to the above aspect,
the presenter may present the acquired information regarding the bonus immediately before the confirmer requires confirmation of the selected stage.

In the order receiving device according to the above aspect,
the presenter may present the acquired information regarding the bonus with information that the confirmer requires confirmation of the selected stage.

An order receiving method according to a second aspect of the present invention is performed by an order receiving device that includes a receiver, a bonus information acquirer, a confirmer, a selector and a presenter, and includes:
a receiving step in which the receiver receives information regarding the product the user has shown intent to purchase;
a bonus information acquisition step in which the bonus information acquirer acquires information regarding a bonus, the bonus being offered to the user on the condition of an order completion of the product whose information was received;
a confirmation step in which the confirmer requires the user to confirm information necessary for an order at different stages by the time of the order completion;
a selection step in which the selector selects any of the stages, on the basis of the history regarding a product with an incompletion order of one or more products the user had shown intent to purchase in the past; and
a presentation step in which the presenter presents the acquired information regarding the bonus at the selected stage.

A program according to a third aspect of the present invention causes a computer to function as:
a receiver configured to receive information regarding a product a user has shown intent to purchase;
a bonus information acquirer configured to acquire information regarding a bonus, the bonus being offered to the user on the condition of an order completion of the product whose information regarding the product was received;
a confirmer configured to require the user to confirm information necessary for an order at different stages by the time of the order completion;
a selector configured to select any of the stages on the basis of the history of regarding a product with an incompletion order of one or more products the user had shown intent to purchase in the past; and
a presenter configured to present the acquired information regarding the bonus at the selected stage.

An information recording medium according to a fourth aspect of the present invention is computer-readable, and has stored a program that causes a computer to function as:
a receiver configured to receive information regarding a product a user has shown intent to purchase;
a bonus information acquirer configured to acquire information regarding a bonus, the bonus being offered to the user on the condition of an order completion of the product whose information regarding the product was received;
a confirmer configured to require the user to confirm information necessary for an order at different stages by the time of the order completion;
a selector configured to select any of the stages on the basis of the history regarding a product with the incompletion order of one or more products the user had shown intent to purchase in the past; and
a presenter configured to present the acquired information regarding the bonus at the selected stage.

The program of the present invention can be recorded on a computer-readable information recording medium such as a compact disk, a flexible disk, a hard disk, a magnetic optical disk, a digital video disk, a magnetic tape and a semiconductor memory.

The above program can be distributed and sold via a computer communication network independently from a computer on which the program is executed. The above information recording medium can be distributed and sold independently from a computer.

### Effects of the Invention

The present invention can provide an order receiving device, an order receiving method, a program and an information recording medium that are suitable for discouraging a user from stopping the purchase of a product.

### Brief Description of Drawings

FIG. 1 is a diagram illustrating the relationship between an order receiving device according to an embodiment of the present invention and terminal devices which are operated by users;
FIG. 2 is a diagram illustrating a schematic configuration of a typical information processing device in which the order receiving device according to an embodiment of the present invention is realized;
FIG. 3 is a diagram illustrating a schematic configuration of the order receiving device;
FIG. 4 is an example of a page displayed when the user browses for a specific product;
FIG. 5 is an example of a page displayed after the user puts a product in a shopping cart;
FIG. 6 is an example of a page for product order procedures (stage 1);
FIG. 7 is an example of a page for product order procedures (stage 2);
FIG. 8 is an example of a page for product order procedures (stage 3);
FIG. 9 is an example of a page for product order procedures (stage 4);
FIG. 10 is an example of a page for product order procedures (stage 5);
FIG. 11 is a diagram for explaining a bonus table;
FIG. 12 is a diagram for explaining a history table;
FIG. 13 is a diagram for explaining a page showing content of a bonus to be offered to the user;
FIG. 14 is a diagram for explaining a page showing content of a bonus to be offered to the user; and
FIG. 15 is a flow chart for explaining an order receiving processing to be performed by each section of the order receiving device according to the embodiment.

### Mode for Carrying Out the Invention

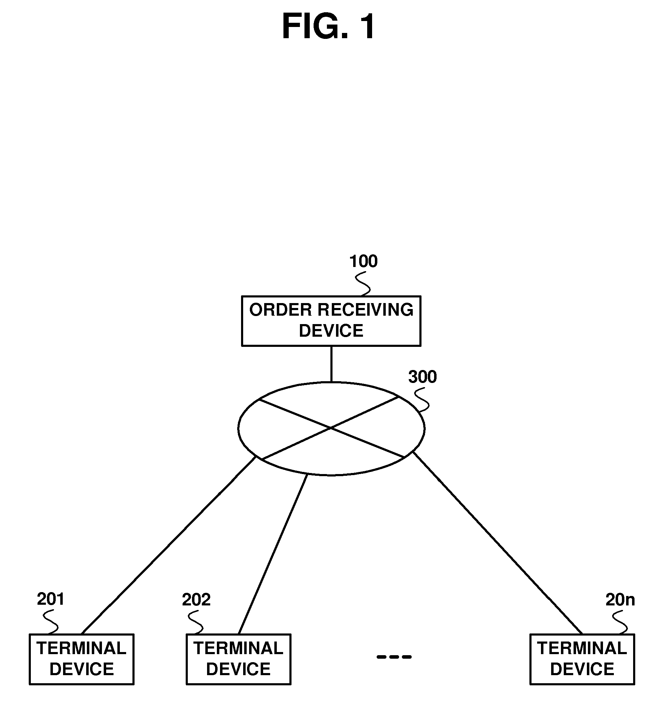

An order receiving device 100 according to an embodiment of the present invention is connected to the Internet 300, as illustrated in FIG. 1. To the Internet 300 are connected terminal devices 201, 202 to 20n that are operated by users. Users use the terminal device 201, 202 to 20n to purchase or sell a product. The order receiving device 100 receives information and the like regarding products that the users have shown intent to purchase via the Internet 300 from the users' terminal devices 201, 202 to 20n, and performs product order procedures.

Hereinafter, a typical information processing device 400 in which the order receiving device 100 according to the embodiment of the present invention is realized will be described.

### (1. Schematic Configuration of Information Processing Device)

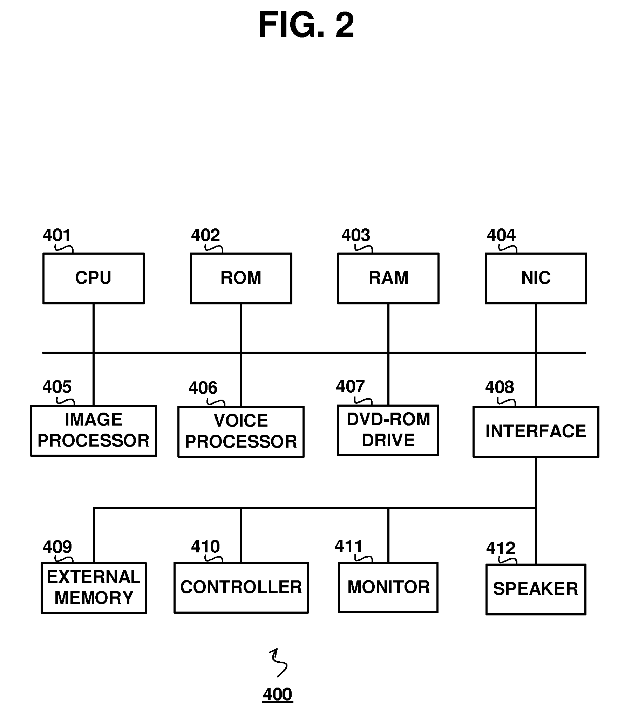

The information processing device 400 is provided with a CPU (central processing unit) 401, a ROM (read only memory) 402, a RAM (random access memory) 403, an NIC (network interface card) 404, an image processor 405, a voice processor 406, a DVD-ROM (digital versatile disc ROM) drive 407, an interface 408, an external memory 409, a controller 410, a monitor 411 and a speaker 412, as illustrated in FIG. 2.

The CPU 401 controls the entire operation of the information processing device 400, is connected to and exchanges control signals and data to and from each component.

The ROM 402 stores an IPL (initial program loader), which is executed immediately after power-on, thereby reading out a predetermined program to the RAM 403 and causing the CPU 401 to start execution of the program. The ROM 402 also stores a program of an operation system necessary for controlling the entire operation of the information processing device 400 and various data.

The RAM 403 is for temporarily storing data and a program, and has a program and data read out from a DVD-ROM, other data necessary for communication, and the like.

The NIC 404 is for connecting the information processing device 400 to a computer communication network such as the Internet 300, and comprises a configuration that conforms to 10BASE-T/100BASE-T standard that is used in configuring a LAN (local area network) and comprises an interface (not illustrated) to interface between a modem and the CPU 401, where the modem includes an analog modem for connecting to the Internet with the use of a telephone line, an ISDN (integrated services digital network) modem, an ADSL (asymmetric digital subscriber line) modem, a cable modem for connecting to the Internet with the use of a cable vision circuit, and/or the like.

The image processor 405 causes data read out from a DVD-ROM and/or the like to be processed by the CPU 401 and an image operation processor (not illustrated) in the image processor 405, and then records the data in a frame memory (not illustrated) in the image processor 405. The image information recorded in the frame memory is converted to a video signal at a predetermined synchronous timing, which is outputted to the monitor 411. This enables various pages to be displayed.

The voice processor 406 converts voice data read out from a DVD-ROM and/or the like to an analog voice signal, which is outputted through the speaker 412 connected to the voice processor 406. The voice processor 406, under the control of the CPU 401, also generates a sound to be produced during processing performed by the information processing device 400 and outputs a voice corresponding to the sound through the speaker 412.

A DVD-ROM loaded into the DVD-ROM drive 407 stores, for example, a program for realizing the order receiving device 100 according to the embodiment. Under the control of the CPU 401, the DVD-ROM drive 407 performs read-out processing on a DVD-ROM loaded thereto to read out a necessary program and data, and temporarily stores the program and data in the RAM 403 and/or the like.

To the interface 408, are connected the removable external memory 409, controller 410, monitor 411 and speaker 412.

The external memory 409 stores rewritable data on personal information regarding a user and the like.

The controller 410 receives an operation input performed at the time of various setups of the information processing device 400 and the like. A user of the information processing device 400 can perform an instruction input through the controller 410 to properly record these data in the external memory 409.

The monitor 411 presents data outputted by the image processor 405 to the user of the information processing device 400.

The speaker 412 presents voice data outputted by the voice processor 406 to the user of the information processing device 400.

The information processing device 400 may be configured to use an external mass storage such as a hard disk to carry out the same function as the ROM 402, RAM 403, external memory 409 and a DVD-ROM loaded into the DVD-ROM drive 407 or the like.

Hereinafter, a schematic configuration of the order receiving device 100 according to the embodiment realized in the above information processing device 400 will be described with reference to FIGS. 1 to 15. When the information processing device 400 is powered-on, a program that causes the information processing device 400 to function as the order receiving device 100 according to the embodiment is executed, thereby realizing the order receiving device 100 according to the embodiment.

### (2. Schematic Configuration of Order Receiving Device)

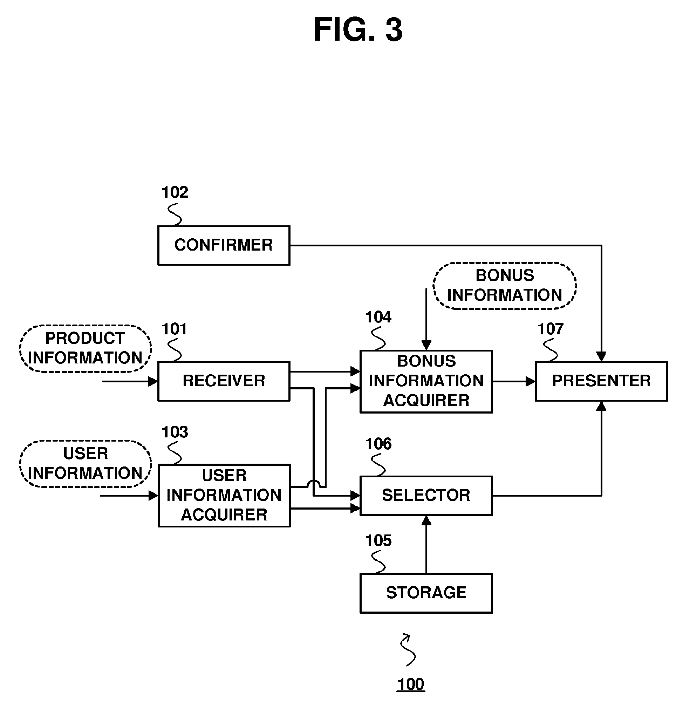

The order receiving device 100 according to the embodiment includes a receiver 101, a confirmer 102, a user information acquirer 103, a bonus information acquirer 104, a storage 105, a selector 106 and a presenter 107, as illustrated in FIG. 3 and is configured as follows.

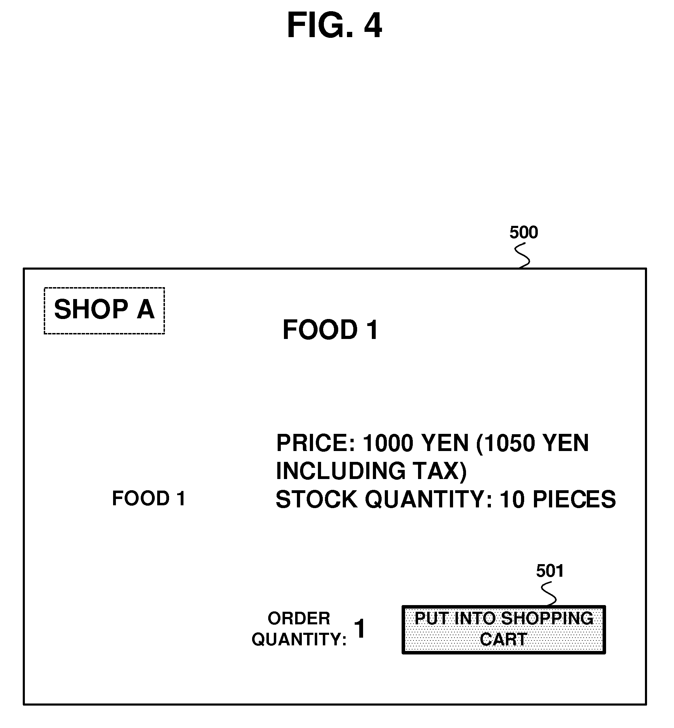

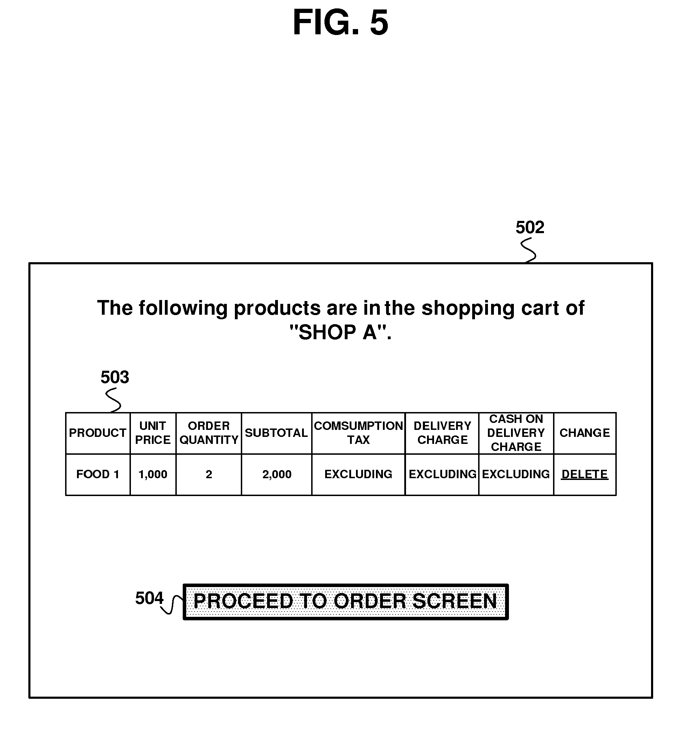

In FIG. 3, the receiver 101 receives information regarding a product that a user has shown intent to purchase (hereinafter referred to as "product information"). For example, user X is browsing, at a terminal device 201, products an online shop "shop A" is selling. When user X selects "food 1" from the products, the screen of the terminal device 201 displays a page 500 that shows detailed information regarding "food 1" (FIG. 4). After user X clicks button 501 for purchasing "food 1", "food 1" is in the shopping cart. "In the shopping cart" means a state where user X desires to purchase "food 1", has not completed the order yet, and can stop the purchase of "food 1". After user X clicks button 501, page 502 is displayed that contains a list 503 of any product in the shopping cart, as illustrated in FIG. 5. Then, when a button 504 is clicked, the receiver 101 receives product information (for example, ID specifying a product) of "food 1" the user X has shown intent to purchase.

In the present embodiment, the CPU 401 and NIC 404 work together to function as the receiver 101.

In FIG. 3, the confirmer 102 requires the user to confirm information necessary for the order at different stages by the time of the order completion. The confirmer 102 according to the present embodiment causes information necessary for the order to be displayed on the screen and requires the user to confirm the information.

In the present embodiment, the CPU 401 and image processor 405 work together to function as the confirmer 102.

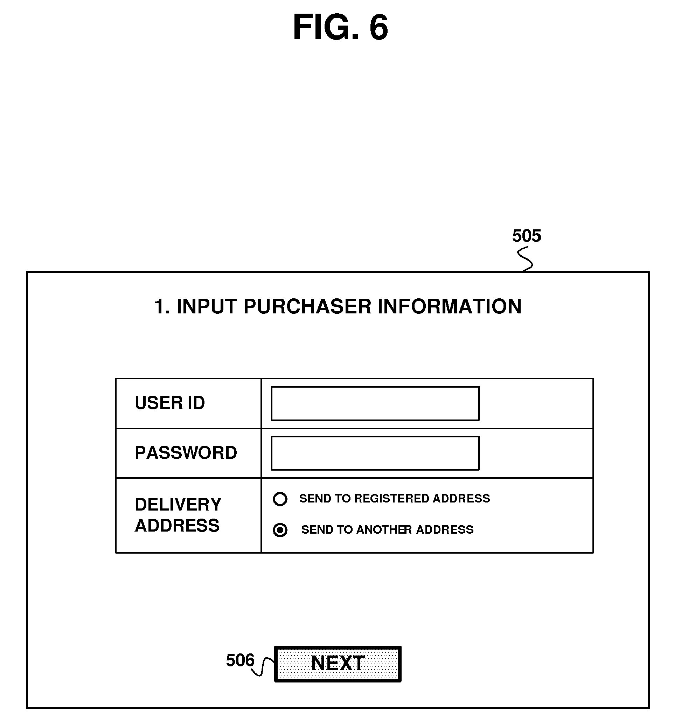

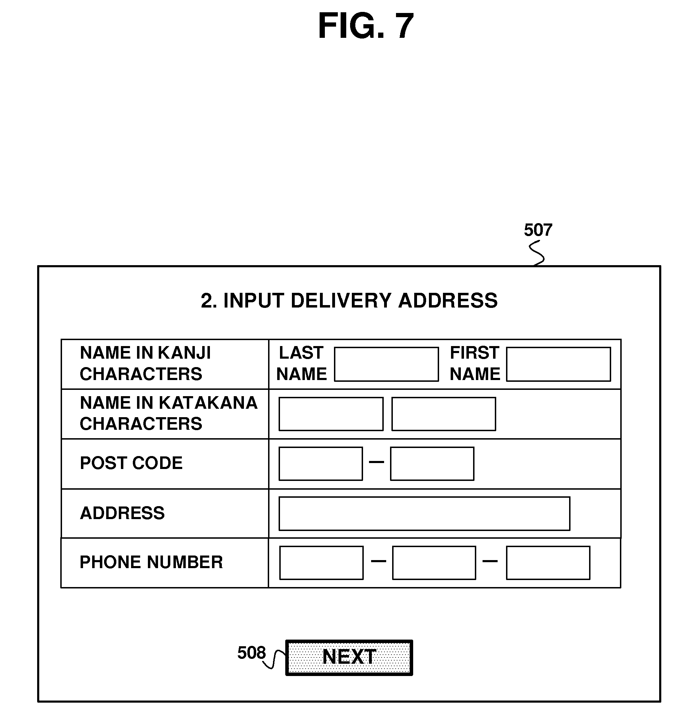

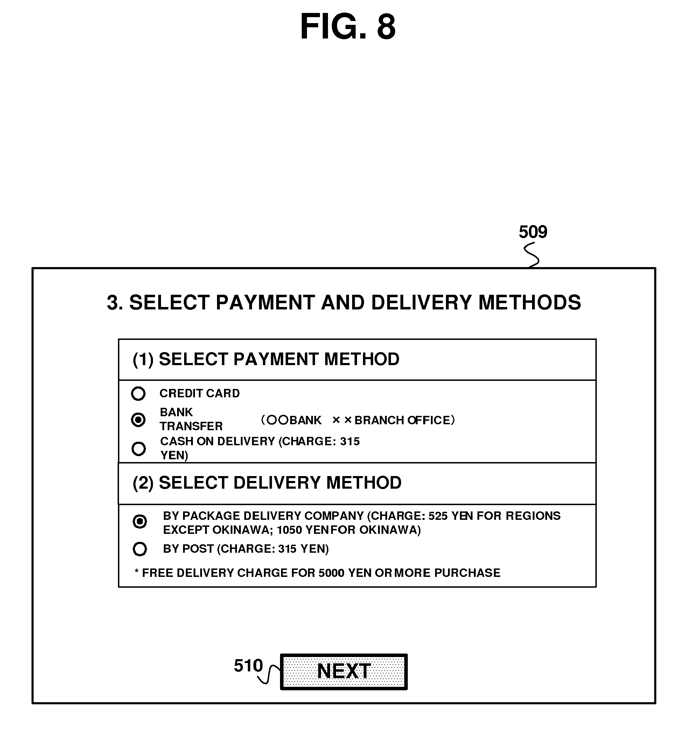

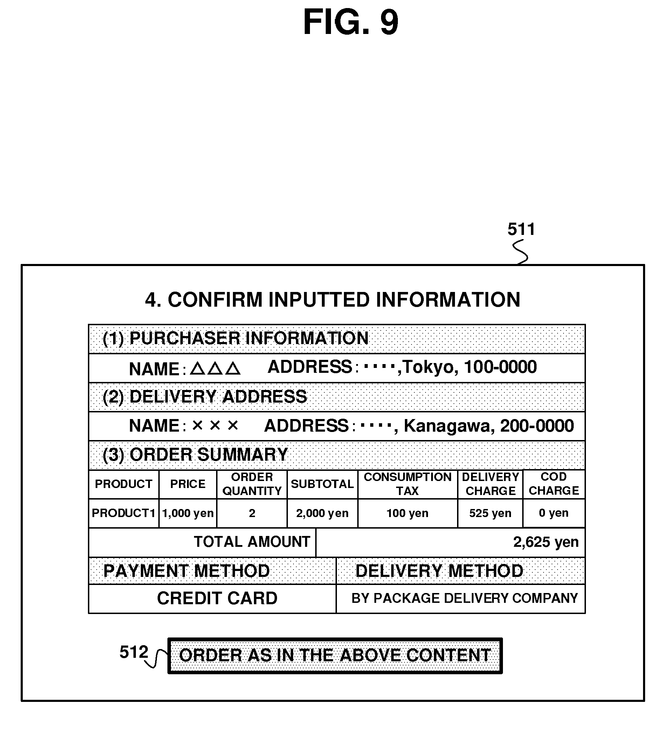

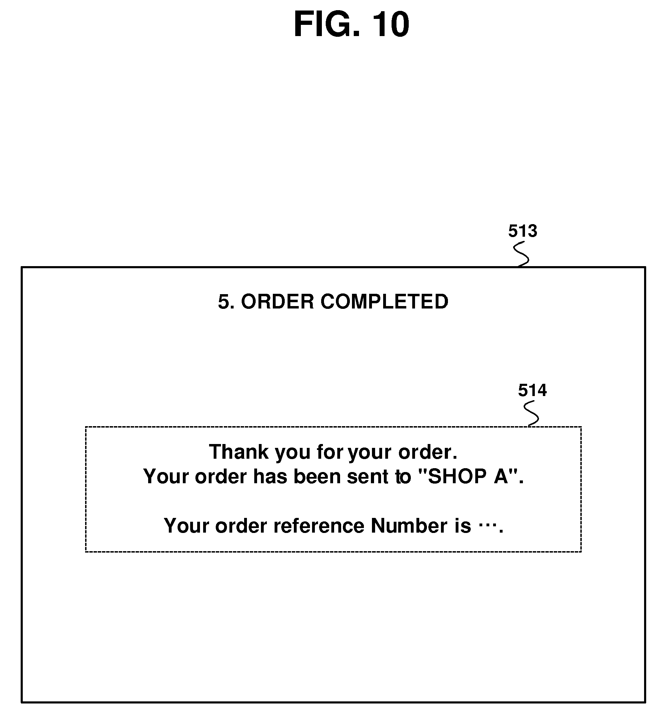

For example, in the screen in FIG. 5, when user X clicks button 504, the confirmer 102 presents to user X pages that require input of the information necessary for the order of the product and the like at different stages. In the present embodiment, there are five stages: "1. Input of purchaser information" (FIG. 6), "2. Input of delivery address information" (FIG. 7), "3. Selection of payment and delivery methods" (FIG. 8), "4. Confirmation of inputted information" (FIG. 9) and "5. Confirmation of order receipt" (FIG. 10).

"1. Input of purchaser information" is the stage (stage 1) for requiring input of the user ID and password in order to acquire information relating to the user.

"2. Input of delivery address information" is the stage (stage 2) for requiring input of a delivery address for a product the user put in the shopping cart.

"3. Selection of payment and delivery methods" is the stage (stage 3) for selecting payment and delivery methods for the product. At this stage, charges for purchasing in addition to the price of the product are displayed. Generally, the amount finally billed varies depending on the payment and delivery methods selected by the user. For example, when the user selects "cash on delivery", a predetermined charge is added to the price of the product. Charges required in payment and delivery may be free depending on the total amount of product(s).

"4. Confirmation of inputted information" is the stage (stage 4) for confirming delivery address the user inputted, payment and delivery address the user selected, and the like. At this stage, the total amount that charges required in payment and delivery are added to the price of the product is displayed.

"5. Confirmation of order receipt" is the stage (stage 5) for notifying the user that order procedures have been completed.

The confirmer 102 sequentially presents these pages 505, 507, 509, 511 and 513 to the user.

In FIG. 3, the user information acquirer 103 acquires information relating to a user (hereinafter, referred to "user information"). For example, the confirmer 102 presents page 505 (FIG. 6) to user X, who inputs "user ID" and "password" and clicks button 506. The user information acquirer 103 identifies user X who is about to perform procedures to order "food 1" from a combination of the "user ID" and "password". For example, where a table containing a combination of the user ID and password and personal information regarding a user in association with each other is stored in the external memory 409 or the like, the user information acquirer 103 refers to the table to acquire personal information such as address of user X corresponding to his/her user ID.

In the present embodiment, the CPU 401 and external memory 409 work together to function as the user information acquirer 103.

In FIG. 3, the bonus information acquirer 104 acquires information regarding a bonus, the bonus being offered to a user (hereinafter referred to as "bonus information") on the condition of the order completion of a product. The bonus information acquirer 104 decides the bonus to be offered on the condition of the order completion on the basis of product information regarding a product that is in the shopping cart and user information acquired by the user information acquirer 103.

In the present embodiment, the CPU 401 functions as the bonus information acquirer 104.

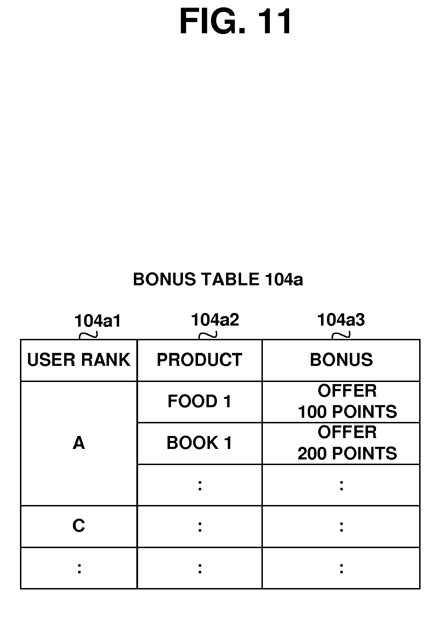

For example, the RAM 403 stores a table as illustrated in FIG. 11 (hereinafter referred to as "bonus table 104a").

"User rank 104a1" is a rank decided based on a user's purchase history. For example, user rank is decided based on a purchase amount and purchase frequency; a user is ranked in four groups (A, B, C, D) based on his/her purchase amount and purchase frequency. "Rank A" is the highest and "rank D" is the lowest. User rank is information that can be acquired as user information with other personal information using the user ID.

"Product 104a2" indicates a product that a user has put in a shopping cart.

"Bonus 104a3" is a bonus to be offered to the user after order completion. A point to be offered as the bonus can be used as cash, for example, 1 point = 1 yen for online shopping.

Accordingly, when the bonus information acquirer 104 receives information regarding "food 1" by the receiver 101, receives information regarding user rank "A" by the user information acquirer 103, and refers to the bonus table 104a in FIG. 11, the bonus obtained by user X at the order completion of "food 1" is found as "offering 100 points".

A method to decide the bonus is not limited to the above. For example, the bonus will be higher for (1) the shorter a period from the date that the latest order has been completed, (2) the greater the total amount of the order, (3) the greater the number of products ordered and/or (4) the greater the variety of categories (food, book, daily item) ordered products belong to. Content of the bonus to be offered may be set according to a combination of products. Alternatively, as will be described later, the bonus to be offered may be decided based on the amount of payment or delivery charge that is decided in the middle of order procedures.

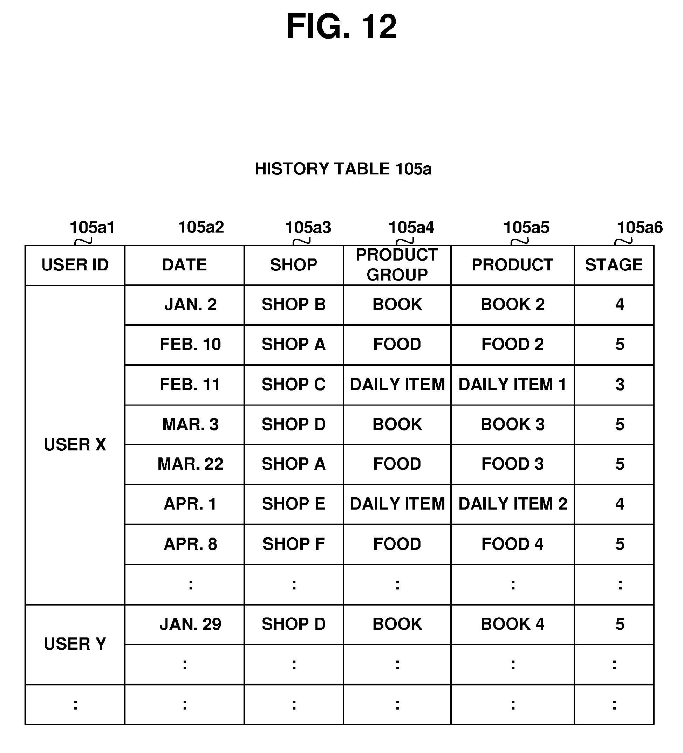

In FIG. 3, the storage 105 stores a history regarding the stage the user had reached for a product the user had shown intent to purchase in the past. "A product the user had shown intent to purchase in the past" is a product the user placed in his/her shopping cart. For example, the storage 105 stores a history table 105a as illustrated in FIG. 12.

The history table 105a stores "user ID 105a1" for identifying a user, "date 105a2" when the user puts a product in his/her shopping cart, "shop 105a3" that sells the product, "product group 105a4" to which the product belongs, "product 105a5" the user has shown intent to purchase, and "stage 105a6" the user has reached in procedures to order the product, in association with one another.

"1" to "5" in the stages 105a6 correspond to "1. Input of purchaser information", "2. Input of delivery address information", "3. Selection ofpayment and delivery methods", "4. Confirmation of inputted information" and "5. Confirmation of order receipt", respectively. Information stored in the history table 105a is registered by the CPU 401 in the order receiving device 100 every time a user puts a product in his/her shopping cart.

In the present embodiment, the RAM 403 functions as the storage 105.

In FIG. 3, the selector 106 refers to the history regarding the product whose order was not completed of products stored in the history table 105a (FIG. 12) in the storage 105, and selects any of the stages presented by the confirmer 102. Specifically, the selector 106 first identifies a user who is performing order procedures based on user information acquired by the user information acquirer 103. Then, the selector 106 finds statistics of the history except stage "5" of the stage 105a6 (order not completed) of products that are stored in the history table 105a and that relate to the history regarding the user. For example, the selector 106 selects the stage with the highest frequency. If the stage with the highest frequency except stage "5" is stage "4" of stages stored in the history table 105a in FIG. 12, the selector 106 selects the stage "4".

In the present embodiment, the CPU 401 functions as the selector 106.

If a product group containing a product with the incompletion order of the products whose information regarding the products was stored in the history table 105a (FIG. 12) in the storage 105 matches a product group of a product that is currently in the shopping cart, the selector 106 may select the stage of the product whose order was not completed.

For example, the history shown in the history table 105a in FIG. 12 is stored and the product that is currently in the shopping cart is "book 1". Since a product group "book" that "book 1" belongs to contains a product whose order was not completed, stage 105a6 the product has reached is referred to. Since the stage of the product is "4", the selector 106 selects stage "4". If there is more than one stage, the earliest stage or stage with the highest frequency may be selected.

For example, a product that is currently in the shopping cart is "food 1". In the history table 105a in FIG. 12, in a product group "food" that "food 1" belongs to, the orders of all products were completed. In such a case, the selector 106 may randomly select the stage.

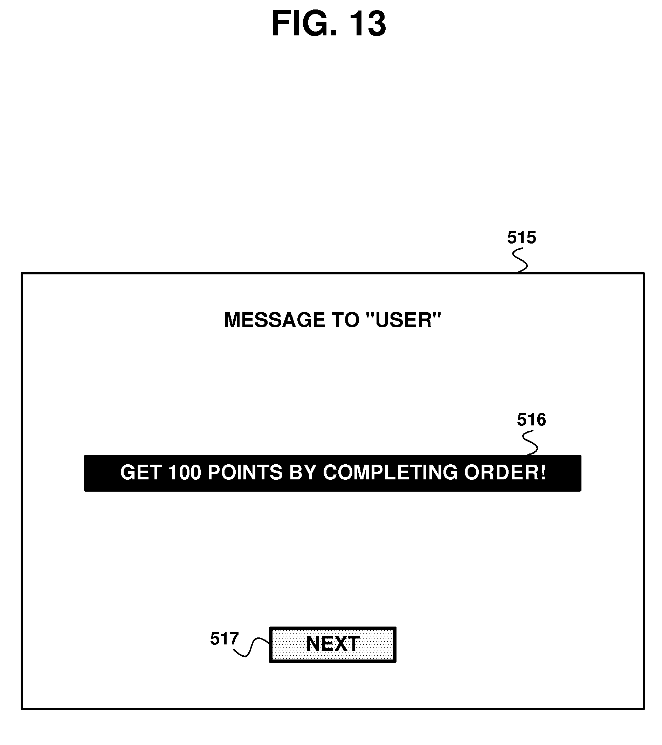

In FIG. 3, the presenter 107 presents bonus information acquired by the bonus information acquirer 104 on the terminal device of user X before the confirmer 102 requires confirmation at the stage selected by the selector 106. For example, the selected stage is "4" and acquired bonus content is "offering100 points". In this case, the presenter 107 presents page 515 (FIG. 13) containing message 516 that displays the bonus to be offered before the confirmer 102 presents page 511 (page of stage 4).

In the present embodiment, the CPU 401 and image processor 405 work together to function as the presenter 107.

The reason a user drops out of the order procedures at each stage is likely considered to be as follows.

If selected stage is "2 (2. Input of delivery address information"), the reason is considered to be that the user does not have information regarding the delivery address since the delivery address is not currently available, that the user feels the input is too troublesome to input, or that the user loses interest in purchasing the product.

If selected stage is "3 (3. Selection of payment and delivery methods)", the reason is considered to be that there is no desired payment method, that a desired payment method requires a payment charge, that there is no desired delivery method, or that a desired delivery method requires a delivery charge.

If selected stage is "4 (4. Confirmation of inputted information)", the reason is considered to be that the total amount determined by adding a payment and/or delivery charge to a product price is higher than the user expected, or that although the user has expected free payment and delivery charges, the user has to make a payment and/or delivery charge.

Since the order receiving device according to the present embodiment presents bonus information at a suitable timing according to the user by the time of order completion, stage "1 (1. Input of purchaser information)" is not included.

Accordingly, before the user drops out of the order procedures, the presenter 107 presents a message that indicates the provision of a bonus to the user to discourage the user from stopping the purchase. Especially, since the reason at stages "3" and "4" is considered to be that the user is dissatisfied with the payment amount, the bonus may be offered corresponding to the displayed amount at each of the stages. For example, if selected stage is "3", it is considered that the user who is carrying out procedures for the purchase stops purchasing by seeing a cash-on-delivery and/or delivery charge. Therefore, the bonus information acquirer 104 may decide a bonus that offers points above cash-on-delivery and/or delivery charge.

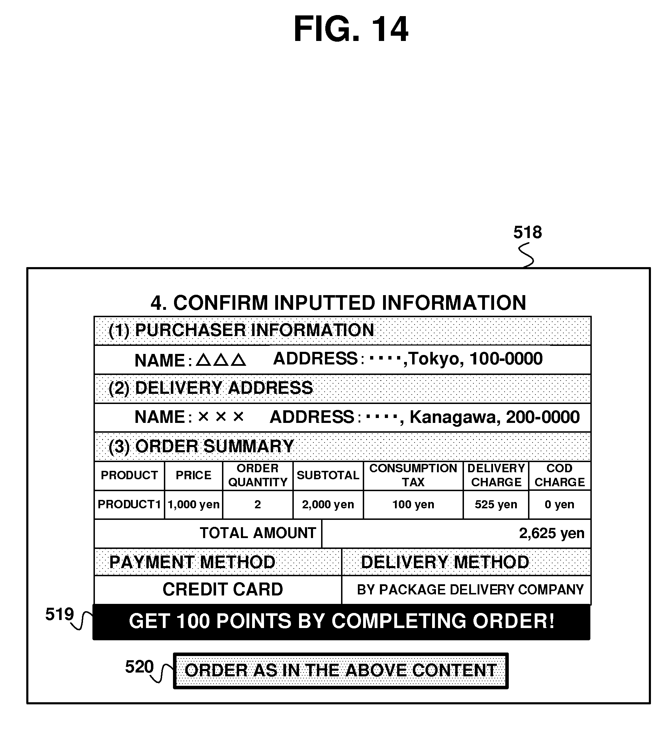

A form in which the presenter 107 presents a bonus is not limited to the form in FIG. 13, but the bonus may be presented to the user together with information to be confirmed in the page at the stage of the order procedures, for example, as illustrated in FIG. 14. At stages during and after the stage selected by the selector 106, message 519 that indicates the bonus to be offered to the user may continue to be displayed in such a way that message 519 is added to each page 507, 509, 511, 513. That is, if stage "3" is selected, the page in which message 519 is added to page 509 is displayed, and also at stage "4" after stage "3", the page containing 519 is displayed. Alternatively, a new window may be opened that notifies message 519 by a pop-up function.

### (3. Operation of order receiving device)

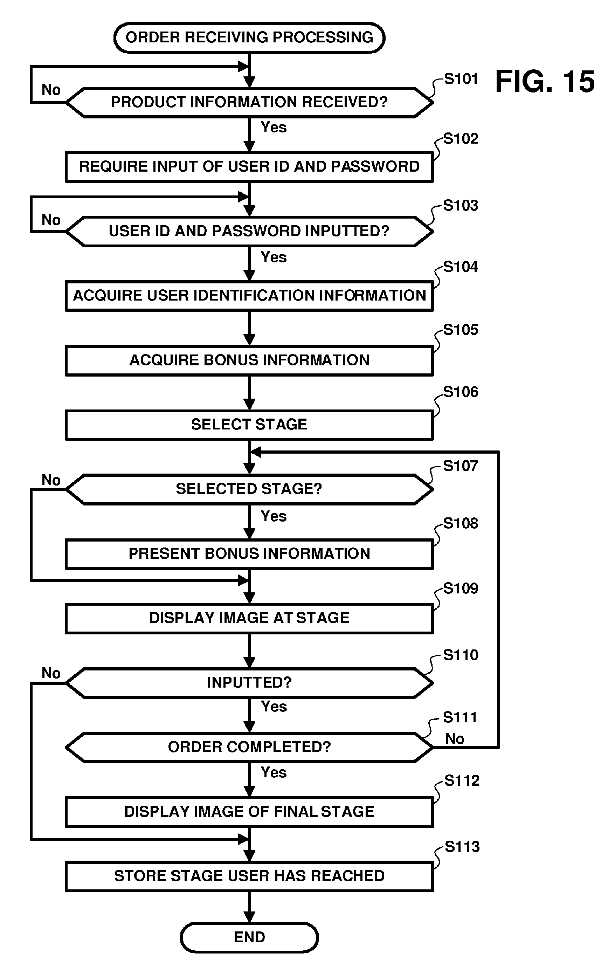

Next, operation performed by each section of the order receiving device 100 will be described in a flow chart in FIG. 15. When the page illustrated in FIG. 5 is displayed on a user's terminal device and button 504 for "proceed to order screen" in the page is clicked, the CPU 401 starts an order receiving processing illustrated in the flow chart in FIG. 15. Hereinafter, the case where user X purchases "food 1" will be described as an example.

The receiver 101 determines whether it has received product information (Step S101). If the receiver 101 determines to have received product information (Step S101; Yes), the confirmer 102 requires user X to input a user ID and password (Step S102). Meanwhile, if the receiver 101 determines to have not received product information (Step S101; No), the receiver 101 is on standby.

For example, when the receiver 101 receives product information regarding "food 1", the confirmer 102 causes the terminal device to display page 505, as illustrated in FIG. 6 and requires user X to input the user ID and password.

Next, the user information acquirer 103 determines whether the user ID and password have been inputted (Step S103). If the user information acquirer 103 determines that the user ID and password have been inputted (Step S103; Yes), the user information acquirer 103 acquires user information (Step S104). Meanwhile, if the user information acquirer 103 determines that the user ID and password have not been inputted (Step S103; No), the user information acquirer 103 is on standby.

For example, when user X inputs the pre-registered user ID and password to a predetermined section in page 505, the CPU 401 accesses, for example, the external memory 409 to acquire information such as name, address or user rank that corresponds to the user ID of user X.

When the receiver 101 receives product information and the user information acquirer 103 acquires user information, the bonus information acquirer 104, in turn, acquires, from the product information and user information, information regarding the bonus to be offered to the user (bonus information) on the condition that the user completes the order of the product (Step S105).

For example, if product information is "food 1" and the user rank of user X is "A", the bonus information acquirer 104 refers to the bonus table 104a in FIG. 11 to find "offering 100 points" as bonus to be offered to user X.

Then, the selector 106, refers to the history regarding the product whose order was not completed of the product(s) stored in the storage 105 on the basis of user information acquired by the user information acquirer 103 thereby to select any of the stages presented by the confirmer 102 (Step S106).

For example, the selector 106 refers to the history regarding user X in the history table 105a in FIG. 12 to select stage "4" with the highest frequency from the stages except stages "1" and "5".

When the selector 106 selects the stage for presenting the bonus information, the presenter 107 determines whether the stage where the confirmer 102 subsequently requires the user to confirm is the stage selected by the selector 106 (Step S107).

If the presenter 107 determines that the stage where the user is subsequently required to confirm is the stage selected by the selector 106 (Step S107; Yes), the presenter 107 presents the bonus information acquired by the bonus information acquirer 104 (Step S108). Then, processing proceeds to Step S109 where the confirmer 102 causes the terminal device to display the page for requiring the user to confirm information necessary for ordering.

Meanwhile, if the presenter 107 determines that the stage subsequently to be displayed is not the stage selected by the selector 106 (Step S107; No), the confirmer 102 causes the terminal device to display the page for requiring the user to confirm information for ordering (Step S109).

For example, if the stage where the confirmer 102 subsequently requires the user to confirm is "4" and the stage selected by the selector 106 is "4", the presenter 107 displays page 515 (FIG. 13) to present to the user content of the bonus the user can acquire after order completion before displaying the page 511 (FIG. 9) to be displayed at stage "4". After that, the confirmer 102 causes the terminal device to display page 511 (FIG. 9).

Meanwhile, if the stage where the confirmer 102 requires the user to confirm is "2" and the stage selected by the selector 106 is "4", the confirmer 102 causes the terminal device to display the page 507 (FIG. 7) that is to be displayed in stage "2".

After the confirmer 102 causes the terminal device to display a predetermined page, the CPU 401 determines whether it has received a predetermined input from the user (Step S110). If the CPU 401 determines that the predetermined input has been received (Step S110; Yes), the CPU 401 further determines whether the order has been completed (Step S111). Meanwhile, the CPU 401 determines that the predetermined input has not been received (Step S110; No), the CPU 401 determines that the order has been stopped and stores the stage the procedure has reached in the storage 105 (Step S113).

For example, when page 507 (FIG. 7) is displayed on the terminal device, the user inputs delivery address information and clicks button 508. Then, the CPU 401 determines it has received the predetermined information, and the CPU 401 determines whether the order has been completed.

Meanwhile, if a predetermined time has passed without the predetermined input after page 507 (FIG. 7) is displayed, the CPU 401 registers the current stage "2" in the history table 105a (FIG. 12) in such a way that the current stage "2" is in association with user information such as user name and information associated with the product in the shopping cart.

If the CPU 401 determines that the order has been completed (Step S111; Yes), the confirmer 102 displays the page of the final stage on the terminal device (Step S112). Then, the CPU 401 stores the current stage in the storage 105 (Step S113), and order receiving processing is terminated. Meanwhile, if the CPU 401 determines that order has not been completed (Step S111; No), processing returns to Step S107 and the confirmer 102 displays the subsequent page.

For example, the confirmer 102 displays page 511 (FIG. 9) and button 512 is clicked. In this case, the confirmer 102 causes the terminal device to display page 513 (FIG. 10) at stage "5" for notifying that the order has been completed. Then, the CPU 401 determines that the order has been completed and registers the current stage "5" in association with user information, product information and the like in the history table 105a (FIG. 12).

Meanwhile, for example, the confirmer 102 displays page 507 (FIG. 7) and button 508 is clicked. In this case the CPU 401 determines that the order has not been completed and the confirmer 102 causes the terminal device to display page 509 (FIG. 8) at the subsequent stage "3".

The flow of order receiving processing has been described above, but the order of steps is not limited to the above order. For example, the order of Step S105 and Step S106 may be reversed.

In the present embodiment, the bonus to be offered to the user on the condition of the order completion is presented to the user at the timing when the user is likely to stop the purchase of the product during the period between receipt of product information and order completion, thereby discouraging the user from stopping the purchase.

In the present invention, various embodiments and modifications can be employed without departing from the general principle and scope of the present invention. The above embodiment is for explaining the present invention, not for limiting the scope of the present invention. That is, the scope of the present invention is defined by claims, not by embodiments. Modifications in the scope of the inventions set forth in claims and their equivalents are also deemed to be within the scope of the present invention.

The present invention is based on Japanese Patent Application No. 2010-149738 filed on June 30, 2010. The entire specification, claims and drawings of Japanese Patent Application No. 2010-149738 are incorporated herein by reference.

### Industrial Applicability

The present invention can provide an order receiving device, an order receiving method, a program and an information recording medium that are suitable for discouraging a user from stopping the purchase of a product.

### Description of Reference Numerals

| | |
|---|---|
| 100 | Order receiving device |
| 101 | Receiver |
| 102 | Confirmer |
| 103 | User information acquirer |
| 104 | Bonus information acquirer |
| 105 | Storage |
| 106 | Selector |
| 107 | Presenter |
| 201, 202 to 20n | Terminal device |
| 300 | Internet |
| 400 | Information processing device |
| 401 | CPU |
| 402 | ROM |
| 403 | RAM |
| 404 | NIC |
| 405 | Image processor |
| 406 | Voice processor |
| 407 | DVD-ROM drive |
| 408 | Interface |
| 409 | External memory |
| 410 | Controller |
| 411 | Monitor |
| 412 | Speaker |
| 500, 502, 505, 507, 509, 511, 513, 515, 518 | Page |
| 501, 504, 506, 508, 510, 512, 517, 520 | Button |
| 503 | List |
| 514, 516, 519 | Message |

## Claims

1. An order receiving device comprising:
a receiver configured to receive information regarding a product a user has shown intent to purchase;
a bonus information acquirer configured to acquire information regarding a bonus, the bonus being offered to the user on the condition of an order completion of the product whose information regarding the product was received;
a confirmer configured to require the user to confirm information necessary for an order at different stages by the time of the order completion;
a selector configured to select any of the stages on the basis of the history regarding a product with an incompletion order of one or more products the user had shown intent to purchase in the past; and
a presenter configured to present the acquired information regarding the bonus at the selected stage.

2. The order receiving device according to claim 1 further comprising:
a storage configured to store information regarding the one or more products the user had shown intent to purchase in the past in association with the history regarding the stage the user had reached,
wherein the selector selects any of the stages on the basis of statistics regarding the stage of the product with the incompletion order of the one or more products whose information regarding the one or more products was stored.

3. The order receiving device according to claim 1 or 2 further comprising:
a storage configured to store information regarding the one or more products the user had shown intent to purchase in the past in association with the history regarding the stage the user had reached,
wherein if a product group that contains the product with the incompletion order of the one or more products whose information regarding the one or more products was stored matches a product group that contains the product whose information regarding the product was received, the selector selects the stage of the product with the incompletion order.

4. The order receiving device according to any one of claims 1 to 3 further comprising:
a user information acquirer configured to acquire information relating to the user,
wherein the bonus information acquirer acquires information regarding the bonus to be offered to the user based on the received information regarding the product and information relating to the user.

5. The order receiving device according to any one of claims 1 to 4,
wherein the presenter presents the acquired information regarding the bonus immediately before the confirmer requires confirmation of the selected stage.

6. The order receiving device according to any one of claims 1 to 5,
wherein the presenter presents the acquired information regarding the bonus with information that the confirmer requires confirmation of the selected stage.

7. An order receiving method to be performed by an order receiving device comprising a receiver, a bonus information acquirer, a confirmer, a selector and a presenter, the method comprising:
a receiving step in which the receiver receives information regarding the product the user has shown intent to purchase;
a bonus information acquisition step in which the bonus information acquirer acquires information regarding a bonus, the bonus being offered to the user on the condition of an order completion of the product whose information regarding the product was received;
a confirmation step in which the confirmer requires the user to confirm information necessary for an order at different stages by the time of the order completion;
a selection step in which the selector selects any of the stages on the basis of the history regarding a product with an incompletion order of one or more products the user had shown intent to purchase in the past; and
a presentation step in which the presenter presents the acquired information regarding the bonus at the selected stage.

8. A program causing a computer to function as:
a receiver configured to receive information regarding a product a user has shown intent to purchase;
a bonus information acquirer configured to acquire information regarding a bonus, the bonus being offered to the user on the condition of an order completion of the product whose information regarding the product was received;
a confirmer configured to require the user to confirm information necessary for an order at different stages by the time of the order completion;
a selector configured to select any of the stages on the basis of the history regarding a product with an incompletion order of one or more products the user had shown intent to purchase in the past; and
a presenter configured to present the acquired information regarding the bonus at the selected stage.

9. A computer-readable information recording medium having stored a program, the program causing a computer to function as:
a receiver configured to receive information regarding a product a user has shown intent to purchase;
a bonus information acquirer configured to acquire information regarding a bonus, the bonus being offered to the user on the condition of an order completion of the product whose information regarding the product was received;
a confirmer configured to require the user to confirm information necessary for an order at different stages by the time of the order completion;
a selector configured to select any of the stages on the basis of the history regarding a product with the incompletion order of one or more products the user had shown intent to purchase in the past; and
a presenter configured to present the acquired information regarding the bonus at the selected stage.
